(19) **Europäisches Patentamt / European Patent Office / Office européen des brevets**

(11) **EP 4 700 689 A1**

(12) **EUROPEAN PATENT APPLICATION**
published in accordance with Art. 153(4) EPC

(43) Date of publication:
**25.02.2026 Bulletin 2026/09**

(21) Application number: **24792523.3**

(22) Date of filing: **05.04.2024**

(51) International Patent Classification (IPC):
**G06Q 50/06** (2024.01)

(52) Cooperative Patent Classification (CPC):
**G06Q 50/06**

(86) International application number:
**PCT/JP2024/014011**

(87) International publication number:
**WO 2024/219248 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 JP 2023068922**

(71) Applicant: **Hitachi, Ltd.**
**Tokyo 100-8280 (JP)**

(72) Inventors:
• **KAWAMURA Tsutomu**
**Tokyo 100-8280 (JP)**

• **KUMAGAI Masatoshi**
**Tokyo 100-8280 (JP)**
• **MORIBE Hirotaka**
**Tokyo 100-8280 (JP)**
• **ITO Tomomichi**
**Tokyo 100-8280 (JP)**
• **MATSUI Ryohei**
**Tokyo 100-8280 (JP)**

(74) Representative: **Mewburn Ellis LLP**
**Aurora Building**
**Counterslip**
**Bristol BS1 6BX (GB)**

(54) **ELECTRICITY RATE PLANNING SYSTEM AND ELECTRICITY RATE PLANNING METHOD**

(57) An energy service provider server prepares an electric power rate plan and an energy facility plan, sends the electric power rate plan and the energy facility plan to a retail electricity utility server, prepares an energy facility operation plan, and sends the energy facility operation plan to a consumer server. The retail electricity utility server displays the electric power rate plan and the energy facility plan sent from the energy service provider server, approves the electric power rate plan and the energy facility plan, and sends the electric power rate plan and the energy facility plan to the consumer server.

[FIG. 1]

*FIG. 1*

EP 4 700 689 A1

## Description

Technical Field

The present invention relates to an electric rate planning system and an electric rate planning method.

Background Art

In order to realize "carbon neutral in 2050" declared by the Japanese government, it is necessary to maximally introduce renewable energy, electrification/motorization, heat utilization, and utilization of new fuels including hydrogen. Under such circumstances, in the industrial and consumer fields, expectations are increasing for energy management for realizing optimal use of energy of consumer facilities by utilizing digital technologies in addition to conventional energy saving.

On the other hand, due to the recent electric power demand-supply tightness and fuel price increase, the spot price of the domestic electricity wholesale market has increased and the volatility has expanded, and the risks of both retail electricity utilities and consumers have increased. In this respect, retail electricity utilities, including former general electricity utilities in addition to power producers and suppliers, have shifted to market-linked electric rate, but with a market-linked electric rate with a cap, the risk of electric power procurement still remains for retail electricity utilities.

In addition, consumers such as buildings and factories need to promote maximum introduction of renewable energy and electrification/motorization in order to realize carbon neutral, but the introduction of energy facilities for decarbonization stagnates due to an increase in electric power rates.

In order to solve such problems, PTL 1 discloses a method of controlling energy facilities in accordance with fluctuations in electric rates to reduce electric power purchase costs.

Citation List

Patent Literature

PTL 1: JP 2018-157615 A

Summary of Invention

Technical Problem

However, the method disclosed in PTL 1 has a problem where it is difficult to stably reduce the energy cost because a consumer cannot grasp a variation in electric rate in advance and thus fails to prepare an efficient operation plan of the energy facility.

An object of the present invention is to prepare an electric power rate plan for guiding efficient operation of an energy facility that reduces energy costs in an electric rate planning system.

Solution to Problem

An electric rate planning system according to one aspect of the present invention is an electric rate planning system including an energy service provider server assigned to an energy service provider, a retail electricity utility server assigned to a retail electricity utility, and a consumer server assigned to a consumer, in which the energy service provider server prepares an energy facility plan regarding an energy facility for each consumer, an electric power rate plan suitable for the energy facility plan, and an energy facility operation plan suitable for the energy facility plan based on energy facility operation data sent from the consumer server, sends the electric power rate plan and the energy facility plan that are prepared to the retail electricity utility server, and sends the prepared energy facility operation plan to the consumer server, the retail electricity utility server displays the electric power rate plan and the energy facility plan sent from the energy service provider server, performs approval by the retail electricity utility, and sends the electric power rate plan and the energy facility plan that are approved to the consumer server, and the consumer server creates and outputs the energy facility operation data based on the energy facility operation plan sent from the energy service provider server, the electric power rate plan and the energy facility plan sent from the retail electricity business server.

Advantageous Effects of Invention

According to one aspect of the present invention, in an electric rate planning system, it is possible to prepare an electric power rate plan that guides efficient operation of an energy facility that reduces the energy cost.

Brief Description of Drawings

[FIG. 1] FIG. 1 is a diagram illustrating an overall configuration of an electric rate planning system.
[FIG. 2] FIG. 2 is a configuration diagram of an energy system.
[FIG. 3] FIG. 3 is a diagram illustrating a configuration of an electric rate planning apparatus.
[FIG. 4] FIG. 4 is an example of an electric rate plan.
[FIG. 5] FIG. 5 is a diagram illustrating a processing flow of an electric rate plan.
[FIG. 6] FIG. 6 is a diagram illustrating an example of an electric power market price evaluation result.
[FIG. 7] FIG. 7 is a diagram illustrating an example of an electric power demand evaluation result.
[FIG. 8] FIG. 8 is a diagram illustrating an example of an electric power rate plan and an operation plan of an energy facility in a conventional method.
[FIG. 9] FIG. 9 is a diagram illustrating an example of an electric power rate plan and an operation plan of an energy facility according to an embodiment.
[FIG. 10] FIG. 10 is a diagram illustrating contents of an electric power rate plan/energy facility DB.
[FIG. 11] FIG. 11 is a diagram illustrating an example of specifications of an energy facility of a consumer, contract conditions of purchased electric power, and conditions of a retail electricity utility.

Description of Embodiments

Hereinafter, embodiments will be described with reference to the drawings.

Embodiments

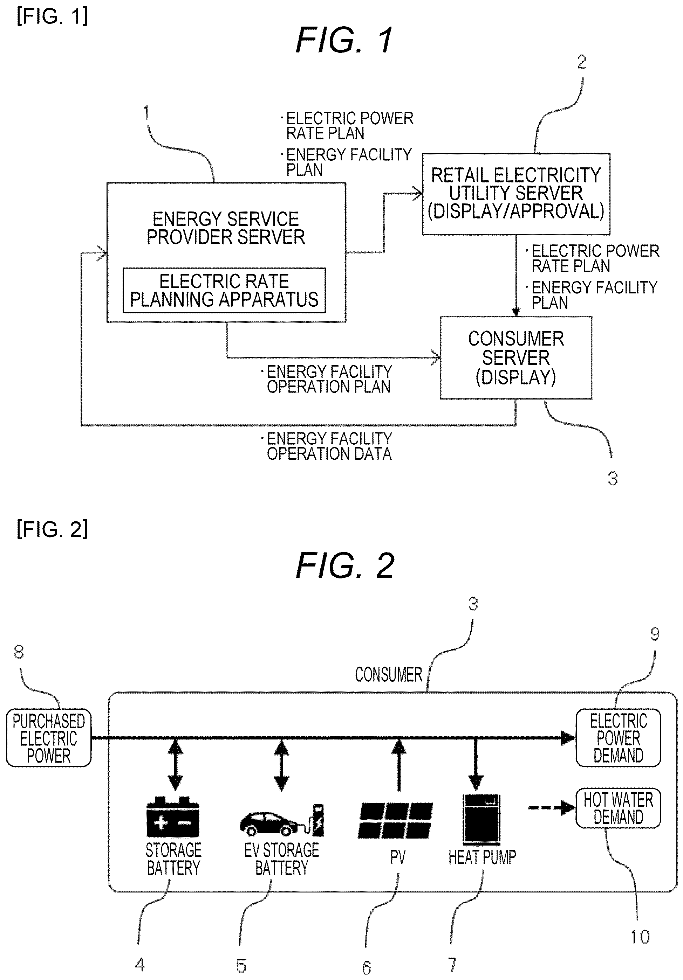

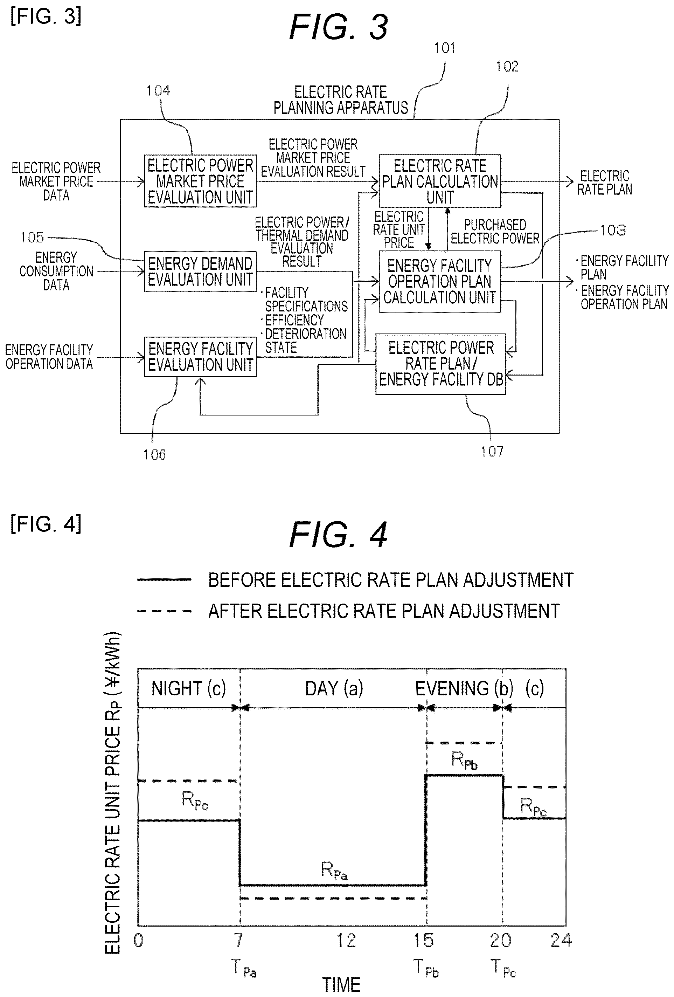

FIG. 1 is a diagram illustrating an overall configuration of an electric rate planning system according to an embodiment, and is a relationship diagram of stakeholders.
As illustrated in FIG. 1, the electric rate planning system includes an energy service provider server 1 assigned to an energy service provider, a retail electricity utility server 2 assigned to a retail electricity utility, and a consumer server 3 assigned to a consumer. Here, the energy service provider server 1 includes an electric rate planning apparatus 101 illustrated in FIG. 3.
Based on the energy facility operation data sent from the consumer server 3, the energy service provider server 1 prepares an energy facility plan regarding the energy facility for each consumer, an electric power rate plan suitable for the energy facility plan, and an energy facility operation plan suitable for the energy facility plan.
The energy service provider server 1 sends the prepared electric power rate plan and energy facility plan to the retail electricity utility server 2, and sends the prepared energy facility operation plan to the consumer server 3.
The retail electricity utility server 2 displays the electric power rate plan and the energy facility plan sent from the energy service provider server 1, performs approval by the retail electricity utility, and sends the approved electric power rate plan and energy facility plan to the consumer server 3.
The consumer server 3 creates and outputs energy facility operation data based on the energy facility operation plan sent from the energy service provider server and the electric power rate plan and the energy facility plan sent from the retail electricity business server.
Here, the consumer server 3 may display the energy facility operation plan sent from the energy service provider server and the electric power rate plan and the energy facility plan sent from the retail electricity business server to the consumer.
As described above, the energy service provider server 1 proposes the energy facility plan and the electric power rate plan suitable for decarbonization to the retail electricity business server 2, and proposes the energy facility plan and the electric power rate plan suitable for the consumer to the consumer server 3 in cooperation with the retail electricity utility server 2.
After a consumer makes a contract with the retail electricity utility and introduces an energy system, the energy service provider server 1 acquires energy facility operation data from the consumer server 3, and performs a service of creating or controlling an energy facility operation plan for reducing energy costs.
FIG. 2 illustrates an example of an energy system installed in a consumer such as a building or a factory.
A consumer covers electric power for air conditioning, lighting, mechanical power, and the like with a solar power generation facility (PV) or purchased electric power, and charges and discharges electric power using a storage battery or a storage battery of an electric vehicle (EV). In order to supply hot water to air conditioning, hot water supply, production facility, and the like, hot water is supplied by a heat pump (HP). At this time, the HP consumes electric power. In general, when an energy system is constituted by a plurality of distributed energy resources (DERs), a consumer is provided with an energy management system (EMS), and optimal operation planning and control are performed so as to reduce electric power rates and energy costs of the consumer.

FIG. 3 is a configuration diagram of the electric rate planning apparatus 101.

In the present embodiment, an electric power rate planning apparatus that creates a fixed electric rate plan for the next year for each customer will be described.

As illustrated in FIG. 3, the electric rate planning apparatus 101 includes an electric power market price evaluation unit 104, an energy demand evaluation unit 105, an energy facility evaluation unit 106, an electric rate plan calculation unit 102, an energy facility operation plan calculation unit 103, and an electric power rate plan/energy facility DB 107.

The electric power market price evaluation unit 104 inputs past result data of the electric power market price such as spot prices in the electricity wholesale market, corrects the spot prices based on the fuel price used for domestic power generation in a target period (next year) and a predicted value of an introduction amount of solar power generation as necessary, and creates data to be input to the electric rate plan calculation unit 102.

The energy demand evaluation unit 105 inputs result data of past energy consumption such as electric power and heat (hot water, steam) of a target consumer, corrects the energy demand based on predicted values of the number of visitors or the number of tenants of a building in a target period (next year) or a production plan of a factory as necessary, and creates data to be input to the energy facility operation plan calculation unit 103.

The energy facility evaluation unit 106 uses the operation result data of the energy facility of the target consumer, and determines the specifications such as the performance and the number of energy facilities based on the information such as the efficiency and the deterioration state of the energy facility and the information of the electric power rate plan/energy facility DB 107.

The electric rate plan calculation unit 102 inputs the electric power market price evaluation result from the electric power market price evaluation unit 104 and the calculation result of the purchased electric power from the energy facility operation plan calculation unit 103, and outputs the electric power rate unit price of the next year suitable for the target consumer to the energy facility operation plan calculation unit 103.

The energy facility operation plan calculation unit 103 inputs the electric power/thermal demand evaluation result from the energy demand evaluation unit 105 and the facility specifications, efficiency, and deterioration state from the energy facility evaluation unit 106, calculates the energy facility suitable for the target consumer and the operation plan thereof, and outputs the calculation result of the purchased electric power to the electric rate plan calculation unit 102.

In the present embodiment, the electric rate plan calculation unit 102 and the energy facility operation plan calculation unit 103 calculate and output the electric power rate plan, the energy facility, and the energy facility operation plan suitable for the consumer by performing coupled calculations. The electric power rate plan/energy facility DB 107 stores calculation results for each consumer.

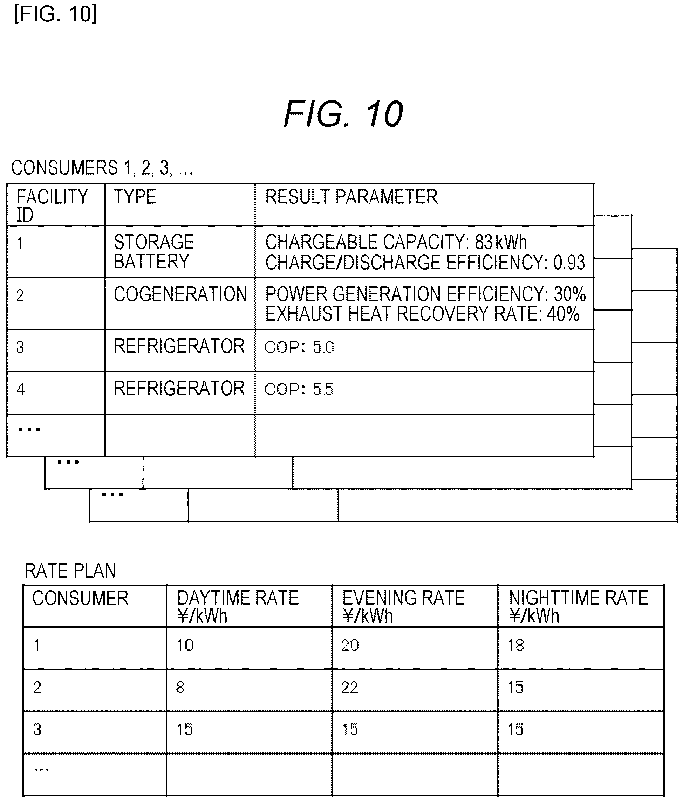

Here, the contents of the electric power rate plan/energy facility DB 107 are shown in FIG. 10.

As illustrated in FIG. 10, the electric power rate plan/energy facility DB 107 stores a facility ID, a type, and a result parameter for each consumer. For example, in the "facility ID 1", a storage battery is stored as the" type ", and the chargeable capacity (3 kWh) and the charge/discharge efficiency (0.93) are stored as the "result parameter".

Furthermore, the electric power rate plan/energy facility DB 107 stores a rate plan. The rate plan includes consumer, daytime rate, evening rate, and nighttime rate.

In a case where an electric power rate plan, an energy facility, and an energy facility operation plan of a new consumer are calculated, it is possible to greatly reduce the calculation time by extracting results similar to the energy demand of the new consumer, the facility specifications, efficiency, and deterioration state of the energy facility from the electric power rate plan/energy facility DB 107 and calculating the results.

A calculation method of the electric rate plan calculation unit 102 and the energy facility operation plan 103 will be described below.

First, formulation of calculation of the electric rate plan calculation unit 102 will be described below.

Objective Function

The objective function of the electric rate plan calculation is an electric rate of a certain period (for example, one year) of the consumer, and optimization calculation is performed to minimize objective function U1 (see Expression 1).

$$U1 = \Sigma_m \Sigma_t Rp(t) Pp(t) dt \quad (\text{Expression 1})$$

Here, Rp is the electric rate unit price (¥/kWh), Pp is the purchased electric power (kW), m is the day of the electric rate plan, t is the time slot of the operation plan for one day (-), and dt is the time interval of the time slot of the operation plan (h).

Constraint Conditions

In order to procure power from the electricity wholesale market an unloading electric power market at a spot price and sell electric power to consumers at a set electric rate price, a retail electricity utility prepares an electric rate plan so as to secure a predetermined profit (see Expression 2 and Expression 3).

$$\text{Electric power procurement cost } W = \Sigma_m \Sigma_t Rs(t)Pp(t)dt$$

$$\text{(Expression 2)}$$

$$\text{Profit } Y = U1 - W \geq aU1 \text{ (Expression 3)}$$

Here, Rs is a spot price (¥/kWh), and a is a profit rate (-).

As illustrated in FIG. 4, the optimization variables of the optimization calculation are the electric rate unit price Rpa (7:00 to 15:00), Rpb (15:00 to 20:00), and Rpc (20:00 to 7:00). The number of divisions of the time zone of the electric rate unit price Rp and the start time of the time zone of the electric rate unit price Rp can also be used as optimization variables. Here, in FIG. 4, a solid line indicates the electric rate unit price before the electric rate plan adjustment, and a dotted line indicates the electric rate unit price after the electric rate plan adjustment.

The optimization calculation method is not limited, but a mathematical programming method such as mixed integer linear programming, or an evolutionary algorithm such as a genetic algorithm (GA) or particle swarm optimization (PSO) is used.

Next, formulation of calculation of the energy facility operation plan calculation unit 103 will be described below.

Objective Function

In the present embodiment, the objective function of the optimization calculation of the energy facility operation plan is the daily energy cost (electric rate) U2 of the consumer, and the optimization calculation is performed so as to minimize the objective function.

$$\text{Electric rate } U2 = \Sigma_n \Sigma_t Rp(t)Pp(t)dt \quad \text{(Expression 4)}$$

Here, n is the day of the operation plan of the energy facility. In the present embodiment, the period of the optimization calculation in the energy facility operation plan calculation unit 103 is set to one-day unit (n = 1), and this calculation is repeated in the target period of the electric rate plan, but the period of the optimization calculation may be changed.

Constraint Conditions

The electric power demand-supply balance in the consumer is shown below. In the present embodiment, the storage battery illustrated in FIG. 2 integrates the stationary storage battery and the EV storage battery.

Demand-Supply Balance $Dp(t)=Ppv(t)+Pbtd(t)-Pbtc(t)+Pp(t)$     (Expression 5)

Here, Dp is electric power demand (kW), Ppv is power generation output (kW) of solar power generation, Pbtd is discharge output (kW) of the storage battery, and Pbtc is charge output (kW) of the storage battery.

The energy balance in the time direction in the storage battery is shown.

$Sbt(t) = Sbt(t-1) + (ebtc \cdot Pbtc(t) - ebtd \cdot Pbtd(t)) \cdot dt$     (Expression 6)

Here, Sbt is the power storage remaining amount SOC (kWh) of the storage battery, ebtc is the charge efficiency (-) of the storage battery, ebtd is the discharge efficiency (-) of the storage battery, and dt is the time interval (h) of the operation plan.

In order to prevent the reverse electric power flow from the consumer to the power grid, when the PV power generation amount cannot be absorbed by the demand and the charging of the storage battery, the output of the PV power generation is suppressed by the following restriction.

$$\texttt{Ppv(t)} \;\leq\; \texttt{Predicted value of PV power generation (t)}$$

$$\texttt{(Expression 7)}$$

The optimization calculation method is not limited, but a mathematical programming method such as mixed integer linear programming, or an evolutionary algorithm such as a genetic algorithm (GA) or particle swarm optimization (PSO) is used. The optimization variables in this embodiment are shown below.
Pp: purchased electric power (kW)
Pbtd: discharge output of storage battery (kW)
Pbtc: charge output of storage battery (kW)
Ppv: output of PV generator (kW)

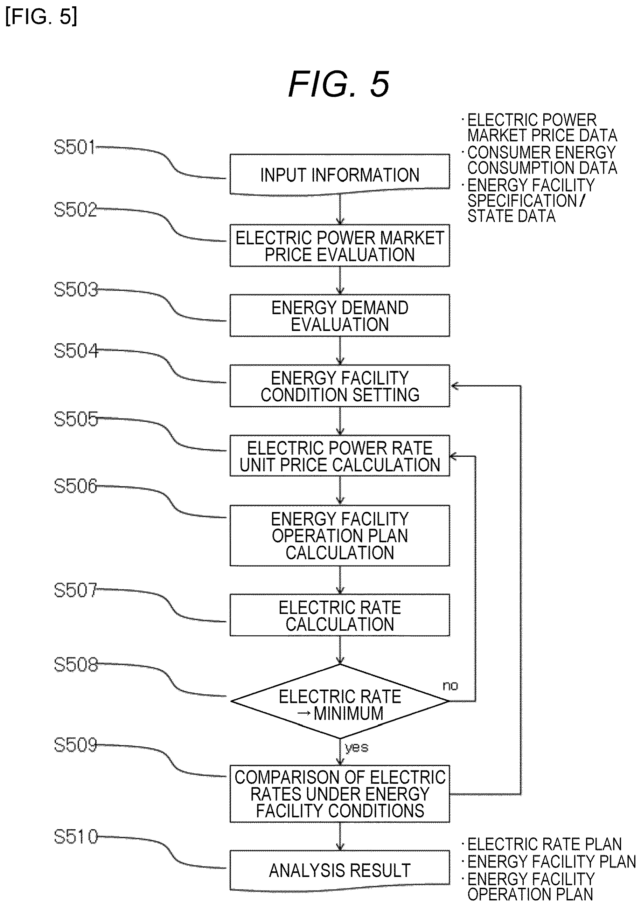

FIG. 5 is a diagram illustrating a processing flow of an electric rate plan.

First, past result data of electric power market prices such as spot prices in the electricity wholesale market, past result data of energy consumption such as electric power and heat (hot water, steam) of the target consumer, and specifications and operation result data of the energy facility are input (S501).

Next, the electric power market price evaluation unit 104 uses the past result data of the electric power market price to correct the spot price as necessary based on the fuel price to be used for domestic power generation in the target period (next year) and the predicted value of the introduction amount of the renewable energy facility such as solar power generation, and creates data to be input to the electric rate plan calculation unit 102 (S502).

Next, the energy demand evaluation unit 105 corrects the energy demand based on the predicted value of the number of visitors or the number of tenants of the building in the target period (next year) or the production plan of the factory as necessary using the result data of the past energy consumption such as the electric power and heat (hot water, steam) of the target consumer, and creates data to be input to the energy facility operation plan calculation unit 103 (S503).

Next, using the operation result data of the energy facility of the target consumer, the energy facility evaluation unit 106 determines specifications of a plurality of cases such as performance and the number of energy facilities based on information such as efficiency and the deterioration state of the energy facility and information of the electric power rate plan/energy facility DB 107 (S504).

Next, the electric rate plan calculation unit 102 inputs the electric power market price evaluation result from the electric power market price evaluation unit 104 and the calculation result of the purchased electric power from the energy facility operation plan calculation unit 103, and calculates the electric power rate price of the electric power rate plan of the next year suitable for the target consumer (S505).

Next, the energy facility operation plan calculation unit 103 inputs the electric power/thermal demand evaluation result from the energy demand evaluation unit 105, the facility specifications from the energy facility evaluation unit 106, and the electric power rate price from the electric rate plan calculation unit 102, and calculates an operation plan and a purchased electric power pattern of the energy facility of the target consumer (S506).

Next, an electric power rate is calculated by multiplying the calculation result of the purchased electric power pattern by the energy facility operation plan calculation unit 103 by the electric power rate unit price which is the input condition (S507).

Next, the purchased electric power pattern from the energy facility operation plan calculation unit 103 is input to the electric rate plan calculation unit 102 until the annual electric rate is minimized with the set specifications of the energy facility, and calculation is repeated (S508).

Next, the calculation results of the electric rates with the specifications of the energy facility of the plurality of cases determined by the energy facility evaluation unit 106 are compared, the electric rate plan, the energy facility specifications, and the energy facility operation plan that minimize the electric rate are determined, and the result is output (S509). Finally, an analysis result is output (S510).

In order to prepare an electric power rate plan suitable for the energy facility of the consumer, the electric power rate plan can be prepared by performing optimization calculation with the electric rate for one year as an objective function as shown in (Expression 1), the electric power procurement cost of the retail electricity utility (Expression 2), the profit rate (Expression 3), and the electric power demand-supply balance of the consumer (Expression 5), (Expression 6), and (Expression 7) as constraint conditions, and the electric power rate unit price Rp and the operation plan of the energy facility of the consumer (purchased electric power Pp, discharge output of storage battery Pbtd, charge output of storage battery Pbtc, output of the PV generator Ppv, and the like) as optimization variables.

However, since the objective function of (Expression 1) is constituted by the product of the electric power rate unit price Rp as an optimization variable and the purchased electric power Pp of the consumer, it is a nonlinear optimization problem, and it is necessary to perform an extremely large number of repeated calculations in order to obtain optimization. Also, there is a possibility that the optimal solution cannot be obtained with a practical analysis time.

Therefore, in the present embodiment, the electric rate plan calculation unit 102 that calculates the optimization problem of the electric rate plan and the energy facility operation plan calculation unit 103 that calculates the optimization problem of the operation plan of the energy facility of the consumer are separated, the electric rate plan calculation unit 102 calculates the electric rate unit price that is the minimum electric rate, the energy facility operation plan calculation unit 103 calculates the plan of purchased electric power with the minimum electric rate of the consumer, and these calculations are performed in a coupled manner, whereby the electric power rate plan suitable for the energy facility of the consumer can be obtained with a practical calculation time.

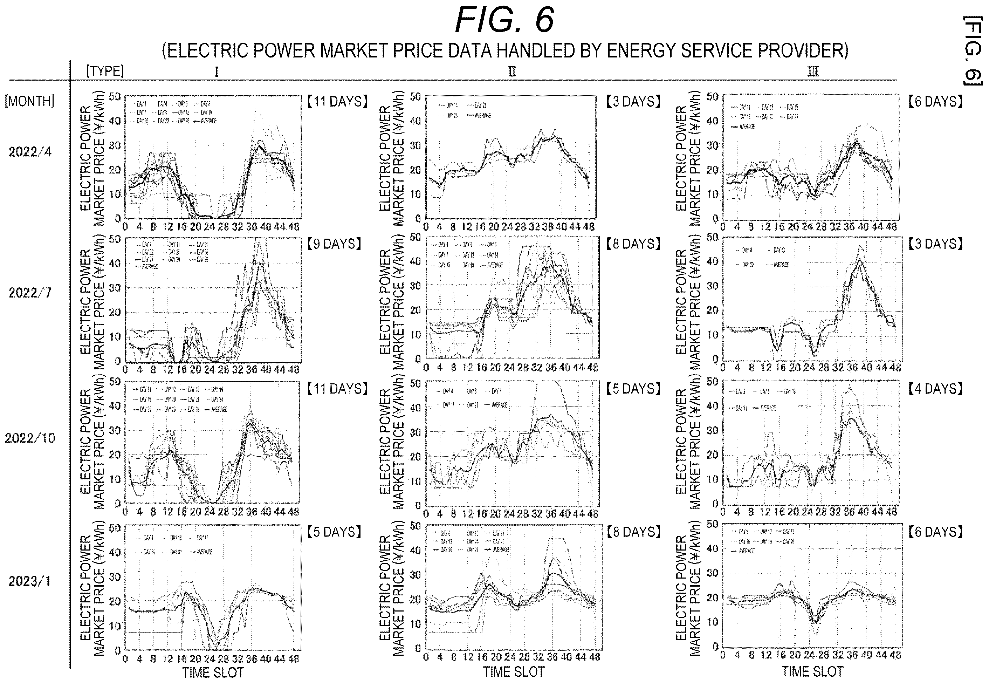

A specific example of the electric power rate plan in the present embodiment will be described below. FIG. 6 illustrates an example of spot price in the electricity wholesale market. FIG. 6 is electric power market price data handled by an energy service provider.

As representative data for each season, data of April 2022 for the spring season, data of July 2022 for the summer season, data of October 2022 for the autumn season, and data of January 2023 for the wintertime are used. The spot price types are classified into three types as shown in FIG. 6.

Type I is a case where the spot price during the day decreases to near ¥0/kWh because the PV power generation amount is larger than the electric power demand on a sunny day. Type II is a case where the spot price during the day is increased to ¥20/kWh or more since there is almost no PV power generation amount on a rainy or cloudy day. Type III is a case where the daytime spot price fluctuates between Type I and Type II. The average value of spot prices is obtained for each combination of representative month and type, and the input data of the annual spot price is created in consideration of the number of days.

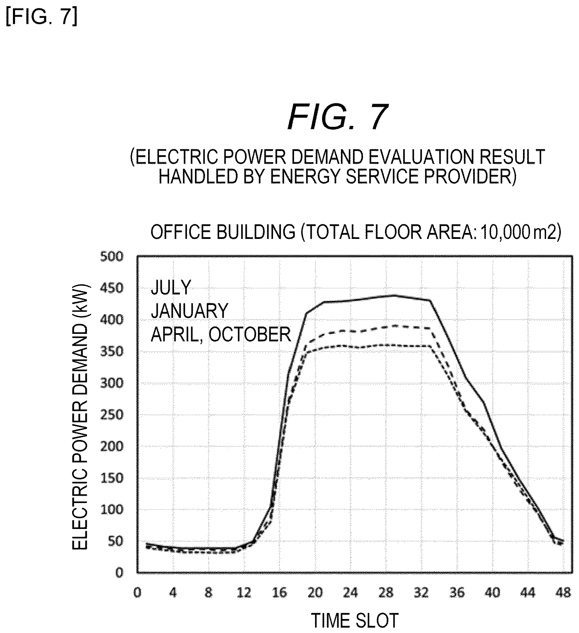

In the present embodiment, a standard office building having a total floor area of 10,000 m$^2$ is assumed as a consumer, and FIG. 7 illustrates a profile of electric power demand in a representative month. FIG. 7 illustrates an electric power demand evaluation result handled by an energy service provider.

The electric power demand sharply increases from around 8:00 at the start time, and gradually decreases from around 16:00 to 24:00. The maximum electric power demand does not change greatly for each season, but increases in the order of wintertime, midterm, and summertime.

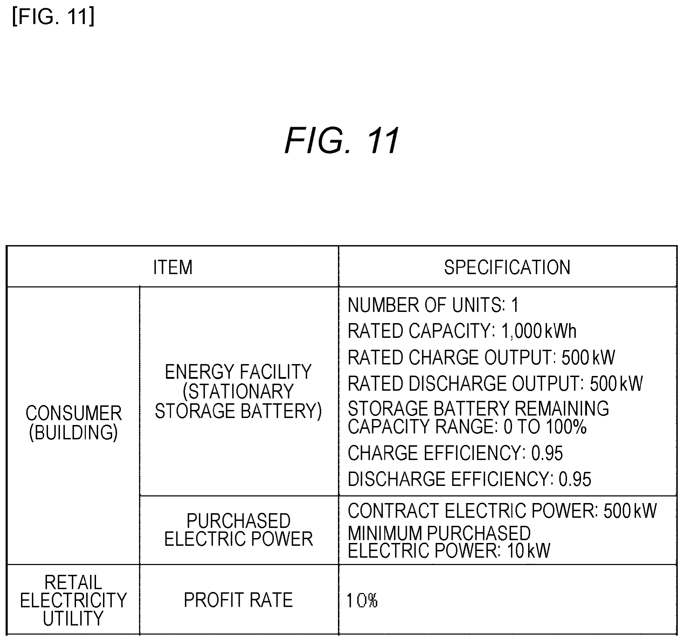

The analysis conditions are shown in FIG. 11. In the present embodiment, the energy system of the consumer is only a stationary storage battery. The storage battery had a capacity of 1,000 kWh, a maximum charge output of 500 kW, a maximum discharge output of 500 kW, a control range of a remaining capacity of the storage battery (SOC) of 0 to 100%, a charge efficiency of 0.95, and a discharge efficiency of 0.95. The contract electric power of the building is 500 kW, and the minimum purchased electric power is 10 kW. The profit rate of the retail electricity utility is 10%.

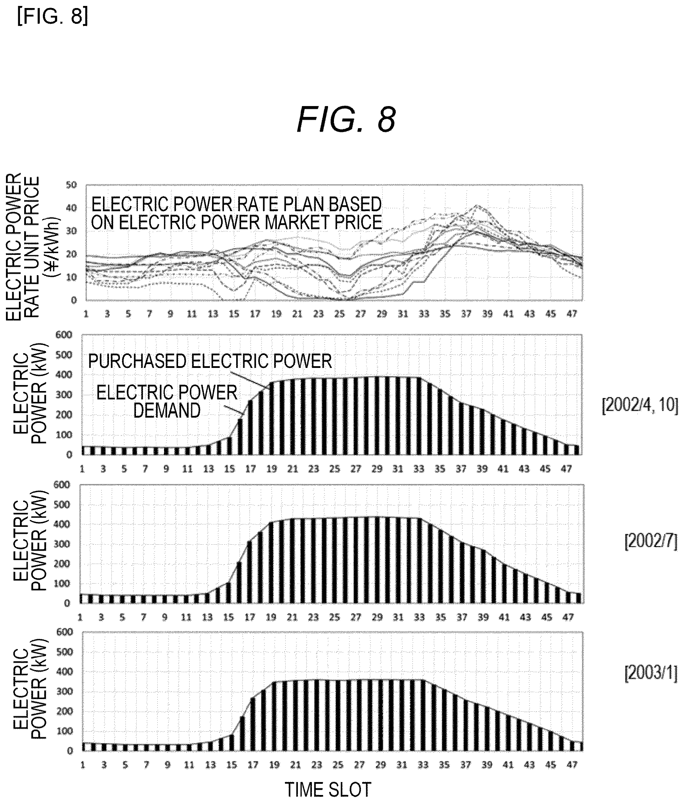

For comparison with the electric power rate plan according to the present embodiment, FIG. 8 shows a result of a case where the consumer does not introduce a storage battery and the electric power demand is covered by electric power purchased at an electric rate based on the spot price. Here, the electric rate unit price based on the spot price is an electric rate unit price obtained by adding 10% of the profit of the retail electricity utility to the spot price. The electric power demand of a building is large in the daytime, and the spot price in the daytime is relatively low, so that the electric rate is low in the daytime. However, since the electric power demand gradually decreases from 16:00 to 24:00, the electric rate in the evening when the spot price is high increases.

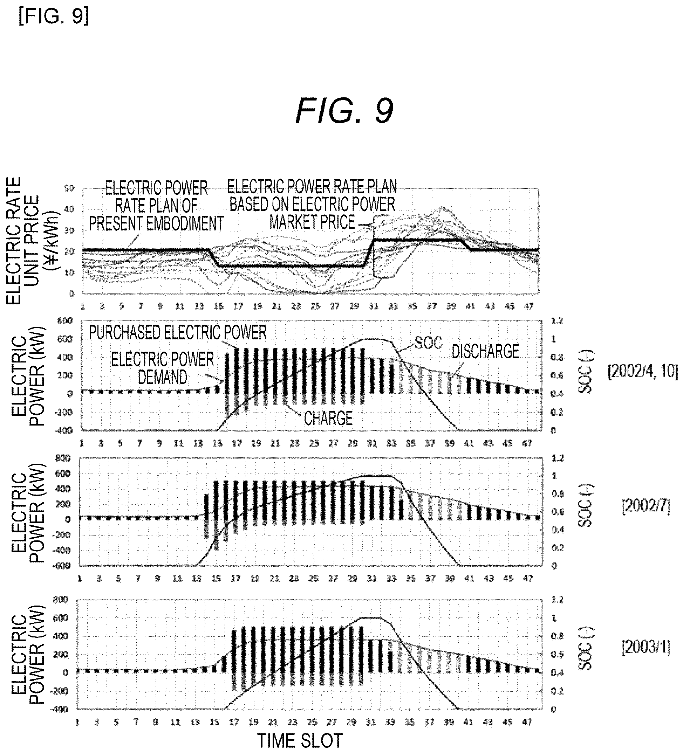

Therefore, FIG. 9 illustrates a result of a case where a consumer introduces a storage battery, and an electric power rate plan is created that has a price signal such that the purchased electric power is suppressed by purchasing electric power in the daytime when the spot price is low and discharging the storage battery in the evening when the spot price is high. FIG. 9 is a display screen of an electric rate plan and an energy facility plan in the retail electricity utility server 2.

As a result of the calculation, the electric power rate plan is ¥13.1/kWh in the daytime, ¥25.5/kWh in the evening, and ¥20.7/kWh in the nighttime. As a result, the electric rate of the building for one year on weekdays is ¥19,196k, and it is ¥22,887k in an electric power rate plan based on the spot price without installing a storage battery, resulting in a reduction of ¥3,691k (16.1%) in electric rate.

Here, the electric rate planning apparatus 101 illustrated in FIG. 3 includes, for example, a computer including an input device, an output device, a memory, a storage device, and a CPU.

In addition, the "function" of each "unit" as a function illustrated in FIG. 3 is realized, for example, by executing a program by a processor (the CPU 950 or the like).

For example, the electric power market price evaluation unit 104 illustrated in FIG. 3 implements the electric power market price evaluation function by executing a program by a processor (CPU or the like). The energy demand evaluation unit 105 illustrated in FIG. 3 implements an energy demand evaluation function by executing a program by a processor (CPU or the like).

The energy facility evaluation unit 106 illustrated in FIG. 3 implements an energy facility evaluation function by executing a program by a processor (CPU or the like). The electric rate plan calculation unit 102 illustrated in FIG. 3 implements an electric rate plan calculation function by executing a program by a processor (CPU or the like).

The energy facility operation plan calculation unit 103 illustrated in FIG. 3 implements an energy facility operation plan calculation function by executing a program by a processor (CPU or the like).

In the above embodiment, the electric power/thermal information of the consumer and the spot price information of the electricity wholesale market are input, and an energy facility plan and an electric power rate plan are created such that electric power usage is increased in a time zone of an inexpensive spot price and electric power usage is suppressed in a time zone of a high spot price.

Information on the electric power demand of the consumer and the electric power market price is input, an energy facility of the consumer is planned so as to use electric power in a time zone in which the electric power market price is low and suppress electric power usage in a time in which the electric power market price is high, and an electric power rate plan and an energy facility plan having a price signal for indirectly controlling the operation of the energy facility are created. An operation plan of the energy facility of the consumer is prepared based on the prepared electric power rate plan.

If such an energy facility plan and an electric power rate plan can be provided to a consumer, a retail electricity utility can suppress a power procurement risk from the electricity wholesale market, and the consumer can purchase electric power at an inexpensive and stable electric power rate.

Therefore, the electric rate can be reduced, and the introduction of the decarbonization energy facility can be accelerated. In addition, in order to promote decarbonization of consumers, it is possible to propose an energy facility and prepare an inexpensive and stable electric rate plan suitable for the energy facility.

As described above, according to the present embodiment, it is possible to propose an inexpensive and stable electric power rate plan according to the energy facility of the consumer.

Reference Signs List

    1 energy service provider server
    2 retail electricity utility server
    3 consumer server
    101 electric rate planning apparatus
    102 electric rate plan calculation unit
    103 energy facility operation plan calculation unit
    104 electric power market price evaluation unit
    105 energy demand evaluation unit
    106 energy facility evaluation unit
    107 electric power rate plan/energy facility DB

**Claims**

1. An electric rate planning system comprising an energy service provider server assigned to an energy service provider, a retail electricity utility server assigned to a retail electricity utility, and a consumer server assigned to a consumer, wherein

    the energy service provider server
    prepares an energy facility plan regarding an energy facility for each consumer, an electric power rate plan suitable for the energy facility plan, and an energy facility operation plan suitable for the energy facility plan based on energy facility operation data sent from the consumer server,
    sends the electric power rate plan and the energy facility plan that are prepared to the retail electricity utility server, and sends the prepared energy facility operation plan to the consumer server,
    the retail electricity utility server
    displays the electric power rate plan and the energy facility plan sent from the energy service provider server, performs approval by the retail electricity utility, and sends the electric power rate plan and the energy facility plan that are approved to the consumer server, and

the consumer server

creates and outputs the energy facility operation data based on the energy facility operation plan sent from the energy service provider server, the electric power rate plan and the energy facility plan sent from the retail electricity business server.

2. The electric rate planning system according to claim 1, wherein

the energy service provider server includes
an electric rate planning apparatus that causes a processor to prepare the energy facility plan, the electric power rate plan, and the energy facility operation plan,
the electric rate planning apparatus includes
an electric power market price evaluation unit, an energy demand evaluation unit, an energy facility evaluation unit, an electric rate plan calculation unit, and an energy facility operation plan calculation unit,
the electric power market price evaluation unit
causes the processor to evaluate electric power market price data and output an electric power market price evaluation result,
the energy demand evaluation unit
causes the processor to evaluate energy consumption data and output an energy demand evaluation result,
the energy facility evaluation unit
causes the processor to evaluate energy facility operation data and output an energy facility evaluation result,
the electric rate plan calculation unit
causes the processor to calculate and output the electric power rate plan based on the electric power market price evaluation result, and
the energy facility operation plan calculation unit
causes the processor to calculate and output the energy facility plan and the energy facility operation plan based on the energy demand evaluation result and the energy facility evaluation result.

3. The electric rate planning system according to claim 2, wherein

the electric rate planning apparatus further includes
an electric power rate plan/energy facility database in which the electric power rate plan and the energy facility are stored for each consumer, and
the energy facility evaluation unit, the electric rate plan calculation unit, and the energy facility operation plan calculation unit
perform the evaluation and the calculation using the electric power rate plan/energy facility database.

4. The electric rate planning system according to claim 2, wherein

the electric rate plan calculation unit
causes the processor to calculate an electric rate unit price suitable for the consumer and output the electric rate unit price to the energy facility operation plan calculation unit,
the energy facility operation plan calculation unit
causes the processor to calculate purchased electric power with reference to the electric rate unit price and output the purchased power to the electric rate plan calculation unit,
the electric rate plan calculation unit
causes the processor to calculate the electric power rate plan with reference to the purchased electric power, and
the energy facility operation plan calculation unit
causes the processor to calculate the energy facility plan and the energy facility operation plan with reference to the electric rate unit price.

5. The electric rate planning system according to claim 2, wherein

the energy facility evaluation unit
causes the processor to output the energy facility evaluation result with reference to the electric power rate plan and the energy facility plan.

6. The electric rate planning system according to claim 2, wherein

the energy facility evaluation unit
outputs, as the energy facility evaluation result, facility specifications of the energy facility, efficiency of the energy facility, and a deterioration state of the energy facility.

7. The electric rate planning system according to claim 6, wherein

the electric rate plan calculation unit
causes the processor to repeatedly calculate a pattern of the purchased electric power from the energy facility operation plan calculation unit until the electric rate unit price is minimized in the set facility specifications of the energy facility.

8. The electric rate planning system according to claim 6, wherein

the energy facility evaluation unit
causes the processor to evaluate and output the facility specifications of the energy facility of a plurality of cases, and
the electric rate plan calculation unit and the energy facility operation plan calculation unit
cause the processor to compare calculation results of the electric rate unit price in the facility specifications of the energy facility of the plurality of cases, and calculate and output the electric rate plan, the energy facility plan, and the energy facility operation plan that minimize the electric rate unit price.

9. The electric rate planning system according to claim 2, wherein

the electric rate plan calculation unit
causes the processor to calculate the electric rate plan so as to use electric power in a first time zone having a first electric power market price and suppress use of the electric power in a second time zone higher than the first electric power market price.

10. An electric rate planning method using an electric rate planning system including an energy service provider server assigned to an energy service provider, a retail electricity utility server assigned to a retail electricity utility, and a consumer server assigned to a consumer, the method comprising:

by the energy service provider server,
preparing an energy facility plan regarding an energy facility for each consumer, an electric power rate plan suitable for the energy facility plan, and an energy facility operation plan suitable for the energy facility plan based on energy facility operation data sent from the consumer server,
sending the electric power rate plan and the energy facility plan that are prepared to the retail electricity utility server, and sending the prepared energy facility operation plan to the consumer server,
by the retail electricity utility server,
displaying the electric power rate plan and the energy facility plan sent from the energy service provider server, performing approval by the retail electricity utility, and sending the electric power rate plan and the energy facility plan that are approved to the consumer server, and
by the consumer server,
creating and outputting the energy facility operation data based on the energy facility operation plan sent from the energy service provider server, the electric power rate plan and the energy facility plan sent from the retail electricity business server.

[FIG. 1]

# FIG. 1

·ELECTRIC POWER
RATE PLAN

·ENERGY FACILITY
PLAN

1

ENERGY SERVICE
PROVIDER SERVER

ELECTRIC RATE
PLANNING APPARATUS

2

RETAIL ELECTRICITY
UTILITY SERVER
(DISPLAY/APPROVAL)

·ELECTRIC POWER
RATE PLAN

·ENERGY FACILITY
PLAN

CONSUMER
SERVER
(DISPLAY)

·ENERGY FACILITY
OPERATION PLAN

·ENERGY FACILITY
OPERATION DATA

3

[FIG. 2]

# FIG. 2

3

CONSUMER

8

PURCHASED
ELECTRIC
POWER

9

ELECTRIC
POWER
DEMAND

STORAGE
BATTERY

EV STORAGE
BATTERY

PV

HEAT PUMP

HOT WATER
DEMAND

4          5          6          7

10

[FIG. 3]

# FIG. 3

ELECTRIC RATE PLANNING APPARATUS

104

ELECTRIC POWER MARKET PRICE DATA → ELECTRIC POWER MARKET PRICE EVALUATION UNIT

ELECTRIC POWER MARKET PRICE EVALUATION RESULT

101

ELECTRIC RATE PLAN CALCULATION UNIT → ELECTRIC RATE PLAN

102

105

ENERGY CONSUMPTION DATA → ENERGY DEMAND EVALUATION UNIT

ELECTRIC POWER/ THERMAL DEMAND EVALUATION RESULT

ELECTRIC RATE UNIT PRICE    PURCHASED ELECTRIC POWER

103

ENERGY FACILITY OPERATION PLAN CALCULATION UNIT → · ENERGY FACILITY PLAN · ENERGY FACILITY OPERATION PLAN

· FACILITY SPECIFICATIONS · EFFICIENCY · DETERIORATION STATE

ENERGY FACILITY OPERATION DATA → ENERGY FACILITY EVALUATION UNIT

ELECTRIC POWER RATE PLAN/ ENERGY FACILITY DB

106

107

[FIG. 4]

# FIG. 4

——— BEFORE ELECTRIC RATE PLAN ADJUSTMENT

- - - - AFTER ELECTRIC RATE PLAN ADJUSTMENT

NIGHT (c)    DAY (a)    EVENING (b)    (c)

$R_{Pc}$    $R_{Pb}$    $R_{Pc}$

$R_{Pa}$

ELECTRIC RATE UNIT PRICE $R_P$ (¥/kWh)

0    7    12    15    20    24

$T_{Pa}$    $T_{Pb}$    $T_{Pc}$

TIME

[FIG. 5]

# FIG. 5

S501 — INPUT INFORMATION

·ELECTRIC POWER
MARKET PRICE DATA
·CONSUMER ENERGY
CONSUMPTION DATA
·ENERGY FACILITY
SPECIFICATION/
STATE DATA

S502 — ELECTRIC POWER MARKET PRICE EVALUATION

S503 — ENERGY DEMAND EVALUATION

S504 — ENERGY FACILITY CONDITION SETTING

S505 — ELECTRIC POWER RATE UNIT PRICE CALCULATION

S506 — ENERGY FACILITY OPERATION PLAN CALCULATION

S507 — ELECTRIC RATE CALCULATION

S508 — ELECTRIC RATE →MINIMUM

no

yes

S509 — COMPARISON OF ELECTRIC RATES UNDER ENERGY FACILITY CONDITIONS

S510 — ANALYSIS RESULT

·ELECTRIC RATE PLAN
·ENERGY FACILITY PLAN
·ENERGY FACILITY
OPERATION PLAN

# FIG. 6

(ELECTRIC POWER MARKET PRICE DATA HANDLED BY ENERGY SERVICE PROVIDER)

[FIG. 6]

EP 4 700 689 A1

[FIG. 7]

# FIG. 7

(ELECTRIC POWER DEMAND EVALUATION RESULT
HANDLED BY ENERGY SERVICE PROVIDER)

OFFICE BUILDING (TOTAL FLOOR AREA: 10,000 m2)

[FIG. 8]

# FIG. 8

[FIG. 9]

# FIG. 9

[FIG. 10]

## FIG. 10

CONSUMERS 1, 2, 3, ...

| FACILITY ID | TYPE | RESULT PARAMETER |
|---|---|---|
| 1 | STORAGE BATTERY | CHARGEABLE CAPACITY: 83 kWh<br>CHARGE/DISCHARGE EFFICIENCY: 0.93 |
| 2 | COGENERATION | POWER GENERATION EFFICIENCY: 30%<br>EXHAUST HEAT RECOVERY RATE: 40% |
| 3 | REFRIGERATOR | COP: 5.0 |
| 4 | REFRIGERATOR | COP: 5.5 |
| ... | | |

RATE PLAN

| CONSUMER | DAYTIME RATE ¥/kWh | EVENING RATE ¥/kWh | NIGHTTIME RATE ¥/kWh |
|---|---|---|---|
| 1 | 10 | 20 | 18 |
| 2 | 8 | 22 | 15 |
| 3 | 15 | 15 | 15 |
| ... | | | |

[FIG. 11]

## FIG. 11

| ITEM | | SPECIFICATION |
|---|---|---|
| CONSUMER (BUILDING) | ENERGY FACILITY (STATIONARY STORAGE BATTERY) | NUMBER OF UNITS: 1<br>RATED CAPACITY: 1,000 kWh<br>RATED CHARGE OUTPUT: 500 kW<br>RATED DISCHARGE OUTPUT: 500 kW<br>STORAGE BATTERY REMAINING CAPACITY RANGE: 0 TO 100%<br>CHARGE EFFICIENCY: 0.95<br>DISCHARGE EFFICIENCY: 0.95 |
| | PURCHASED ELECTRIC POWER | CONTRACT ELECTRIC POWER: 500 kW<br>MINIMUM PURCHASED ELECTRIC POWER: 10 kW |
| RETAIL ELECTRICITY UTILITY | PROFIT RATE | 10% |

## INTERNATIONAL SEARCH REPORT

| | International application No. |
|---|---|
| | **PCT/JP2024/014011** |

**A.    CLASSIFICATION OF SUBJECT MATTER**

*G06Q 50/06*(2024.01)i

FI:    G06Q50/06

According to International Patent Classification (IPC) or to both national classification and IPC

**B.    FIELDS SEARCHED**

Minimum documentation searched (classification system followed by classification symbols)

G06Q50/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2014/091784 A1 (TOSHIBA KK) 19 June 2014 (2014-06-19)<br>entire text, all drawings | 1-10 |
| A | WO 2017/013754 A1 (MITSUBISHI ELECTRIC CORPORATION) 26 January 2017 (2017-01-26)<br>entire text, all drawings | 1-10 |
| A | JP 2015-018374 A (TOSHIBA KK) 29 January 2015 (2015-01-29)<br>entire text, all drawings | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/014011**

| Patent document cited in search report | | | Publication date (day/month/year) | Patent family member(s) | | | Publication date (day/month/year) |
|---|---|---|---|---|---|---|---|
| WO | 2014/091784 | A1 | 19 June 2014 | US | 2014/0163757 | A1 | |
| | | | | EP | 2933774 | A1 | |
| | | | | CN | 103999114 | A | |
| WO | 2017/013754 | A1 | 26 January 2017 | (Family: none) | | | |
| JP | 2015-018374 | A | 29 January 2015 | US | 2015/0323921 | A1 | |
| | | | | EP | 3021276 | A1 | |
| | | | | CN | 104428812 | A | |

Form PCT/ISA/210 (patent family annex) (July 2022)

**EP 4 700 689 A1**

**REFERENCES CITED IN THE DESCRIPTION**

**Patent documents cited in the description**

- JP 2018157615 A